# EUROPÄISCHE PATENTANMELDUNG

(11) **EP 0 989 416 A2**
(43) Veröffentlichungstag der Anmeldung: **29.03.2000**
(21) Anmeldenummer: 99112020.5
(22) Anmeldetag: 22.06.1999
(51) Int. Cl.: G01S 13/48

(54) **Verfahren zur genauen Winkelbemessung von Zielen mittels eines Mehrfachantennen-Radarsystems**

(30) Priorität: 26.09.1998 DE 19844239
(71) Anmelder: DORNIER GmbH, 88039 Friedrichshafen (DE)
(72) Erfinder: Flacke, Joachim, 88677 Markdorf (DE); Heckel, Kuno, 88045 Friedrichshafen (DE); Kaiser, Bruno, 77948 Oberschopfheim (DE)
(74) Vertreter: Meel, Thomas

(57) **Zusammenfassung**

Die Erfindung betrifft ein Verfahren zur genauen Winkelbestimmung von Zielen mittels eines Mehrfachantennen-Radarsystems, wobei die einzelnen Antennenrichtungen (A-1,A0,A1) durch mindestens drei räumlich gegeneinander versetzte Feeds (F-1,F0,F1), die einen gemeinsamen Kollimator (R) beleuchten, erzeugt werden, Durch gleichzeitige und phasenrichtige Ansteuerung mehrerer der Feeds (F-1,F0; F0,F1) werden mindestens zwei Kombinationsantennendiagramme (A0/-1, A0/1) erzeugt, anhand derer die Winkelbestimmung erfolgt, wobei die Schnittpunkte der erzeugten Kombinationsantennendiagramme in Winkelbereichen zu liegen kommen, in denen die exakte Winkelbestimmung erfolgen soll.

## Beschreibung

Die Erfindung betrifft ein Verfahren zur genauen Winkelbestimmung mittels eines Mehrfachantennen-Radarsystems nach dem Oberbegriff des Anspruchs 1.

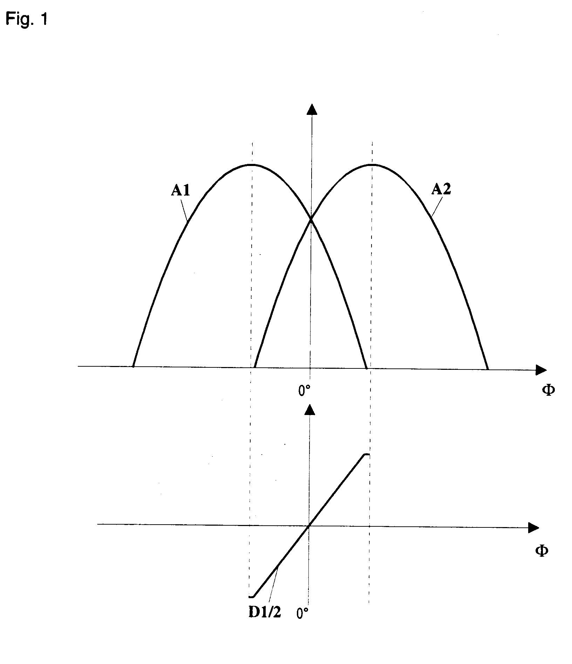

Zur Bestimmung der Zielrichtung mittels Radar werden verschiedene, an sich bekannte Verfahren eingesetzt. Weit verbreitet ist das Sequential Lobing Verfahren (M.I. Skolnik, Introduction to Radar Systems, McGraw-Hill 1980, S.153,154), mit dem aus der Überlagerung der Echosignale in zwei Antennen mit unterschiedlichen Hauptstrahlrichtungen die genaue Richtung zu diesem Ziel bestimmt werden kann. Das Verfahren ist sehr genau im Winkelbereich der Schnittpunkte der Antennendiagramme, während es im Winkelbereich der Hauptstrahlrichtungen der einzelnen Antennen zu größeren Fehlern aufgrund der Form der Antennendiagramme kommen kann.
Die typischen Antennendiagramme mit der zugehörigen Diskriminatorkurve sind in Fig. 1 dargestellt. Die obere Abbildung der Fig. 1 zeigt die beiden Diagramme A1, A2 (Signalamplitude über dem Strahlungswinkel Φ) der beteiligten Antennen. Dargestellt sind in dieser schematischen Zeichnung nur die Hauptkeulen ohne Nebenzipfel. Die untere Abbildung in Fig. 1 zeigt die entsprechende Diskriminatorkennlinie D1/2. Die Werte der Kennlinie errechnen sich beim Sequential Lobing-Verfahren aus den Amplituden der beiden Antennendiagramme und sind proportional zu (A1-A2)/A1+A2) für einen bestimmten Winkel Φ.
Wie man aus den Abbildungen erkennt, ist die Diskriminatorkennlinie im Bereich von Φ=0° sehr steil, so daß in den Schnittpunkten der Antennendiagramme eine sehr genaue Winkelbestimmung möglich ist. Dagegen ist sie im Bereich der Hauptstrahlrichtungen (maximale Amplitude) der beiden Antennen flach, so daß die Winkelmessung für Ziele in diesem Winkelbereich nur unscharf möglich ist.
Mit diesen Zwei-Antennensystemen kann es beim Vorhandensein mehrerer Ziele zu Mehrdeutigkeiten kommen, denn zwei ähnliche Ziele, die jeweils im Bereich der Hauptstrahlrichtungen der Antennen vorhanden sind, können vom System in die Mitte (Φ=0) projiziert werden. Umgekehrt kann ein Ziel aus der Mitte in zwei äußere Ziele aufgetrennt werden.

Um die beschriebenen Mehrdeutigkeiten von Zwei-Antennensystemen zu vermeiden, werden insbesondere bei Radarsystemen, die auf beweglichen Trägern zur Erfassung der Umgebung in der Bewegungsrichtung verwendet werden (z.B. Kraftfahrzeug-Abstandsradar), häufig Drei- oder Fünf-Antennensysteme eingesetzt, bei denen die Hauptstrahlrichtung der mittleren Antenne in die Bewegungsrichtung zeigt. Die typischen Antennendiagramme A-1,A0,A1 der beteiligten Antennen zusammen mit den zugehörigen Diskriminatorkurven D0/-1, D0/1 in einem Drei-Antennensystem sind in Fig. 2 dargestellt. Aus der Fig. 2 wird der Nachteil der Systeme mit ungerader Anzahl von Antennen offensichtlich. Die größte Genauigkeit bei der Winkelbestimmung wird in den Schnittpunkten der Antennendiagramme A-1,A0,A1 erzielt, während in den Winkelbereichen der Hauptstrahlrichtungen der Antennen aufgrund der hohen Richtwirkung der einzelnen Antennen (notwendig zur Erzielung einer guten Winkelauflösung) die Diskriminatorkurve sehr flach ist. Das bedeutet, daß der Winkelfehler dort verhältnismäßig groß wird. Zu den Winkelbereichen mit flacher Diskriminatorkurve gehört insbesondere auch die Hauptstrahlrichtung des Radarsystems (Φ=0°), die bei Anwendungen auf beweglichen Trägern häufig identisch ist mit der Bewegungsrichtung des Trägers.

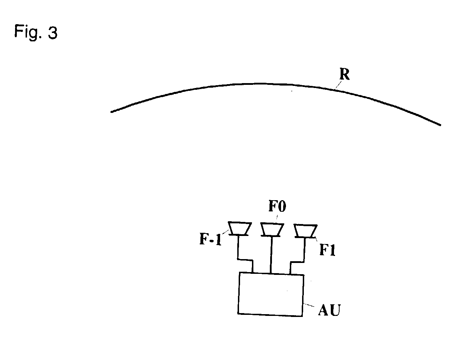

Ein Beispiel für den technischen Aufbau eines Mehrfachantennen-Radarsystems, das zur Winkelbestimmung eines Ziels eingesetzt werden kann, ist in Fig. 3 dargestellt. Es handelt sich hierbei beispielhaft um ein Drei-Antennensystem. Radarsysteme gemäß Fig. 3 sind an sich bekannt und werden insbesondere in Kraftfahrzeug-Abstandsradarsystemen eingesetzt. Das dargestellte Radarsystem umfaßt drei sogenannte Feeds F-1,F0,F1 (auch als Speisepunkte der Antenne bezeichnet), die über einen Antennenumschalter AU einzeln angesteuert werden können. Die Feeds sind räumlich versetzt angeordnet, in Fig. 1 beispielhaft an verschiedenen Punkten einer Geraden. Die Feeds leuchten einen gemeinsamen Kollimator aus, der hier als Reflektor R ausgebildet ist. Es kann aber z.B. auch eine Linse eingesetzt werden. Die einzelnen Antennendiagramme werden durch separate Ansteuerung jeweils eines einzelnen Feeds erzeugt.

Aufgabe der Erfindung ist es, eine Verfahren zur Winkelbestimmung unter Verwendung eines Mehrfachantennen-Radarsystems zu schaffen, mit dem auch in Winkelbereichen, in denen bisher nur eine unscharfe Messung möglich war, eine hochgenaue Winkelbestimmung durchgeführt werden kann. Dies sollte erreicht werden, ohne zusätzliche Antennen zu installieren.

Diese Aufgabe wird mit dem Verfahren nach Anspruch 1 gelöst. Vorteilhafte Ausführungen der Erfindung sind Gegenstand weiterer Ansprüche.

Gemäß der Erfindung erfolgt die exakte Winkelbestimmung unter Einsatz eines Mehrfachantennen-Radarsystems, bei dem die einzelnen Antennenrichtungen durch mindestens drei räumlich gegeneinander versetzte Feeds erzeugt werden, die einen gemeinsamen Kollimator ausleuchten. Ein solches System ist beispielhaft in Fig. 3 dargestellt. Mit einem solchen Radarsystem ist es möglich, durch gleichzeitige und phasenrichtige Ansteuerung von mindestens zwei der Feeds mehrere Kombinationsantennendiagramme zu erzeugen, anhand derer die Winkelbestimmung dann hochgenau erfolgen kann. Dabei werden die Kombinationsantennendiagramme gerade mit einer solchen Form erzeugt, daß deren Schnittpunkte in Winkelbereichen liegen, in denen eine exakte Winkelbestimmung erfolgen soll, also insbesondere dort wo bei der bekannten separierten Ansteuerung der einzelnen Feeds nur eine ungenaue Winkelbestimmung möglich wäre.

Das erfindungsgemäße Verfahren ist für alle Mehrfachantennen-Radarsysteme geeignet, die drei oder mehr räumlich versetzte Feeds aufweisen. Dabei kann die Zahl der Feeds sowohl ungeradzahlig als auch geradzahlig sein. Der zugehörige gemeinsame Kollimator kann insbesondere als Linse oder Reflektor ausgebildet sein.

Für die eigentliche Winkelbestimmung auf der Basis der erzeugten Kombinationsantennendiagramme kann insbesondere das Sequential Lobing-Verfahren angewandt werden, jedoch sind auch andere an sich bekannte Winkelmeßverfahren möglich.

In vielen Fällen besteht besonderes Interesse, daß in Richtung der Hauptstrahlrichtung des Mehrfachantennen-Radarsystems (bei mobilen Anwendungen häufig identisch zur Bewegungsrichtung des Trägers) eine genaue Winkelmessung möglich ist. Um diese zu erreichen, werden durch die erfindungsgemäße Ansteuerung der Feeds zwei Kombinationsantennendiagramme derart ausgebildet, daß ihr Schnittpunkt gerade im Bereich der Hauptstrahlrichtung des Radarsystems liegt. Bevorzugt sind die Kombinationsantennendiagramme dabei symmetrisch zur Hauptstrahlrichtung des Radarsystems. Die Winkelmessung außerhalb der Hauptstrahlrichtung kann mit den herkömmlichen Verfahren, d.h. Einzelansteuerung der Feeds, durchgeführt werden.

Das erfindungsgemäße Verfahren hat den Vorteil, daß die vorteilhafte Wirkung allein durch eine Änderung der Ansteuerung der Feeds erreicht werden kann. Eine Änderung der Hardware des Radarsystems ist nicht notwendig. Software-gesteuert kann zwischen dem bekannten Meßverfahren (Winkelbestimmung auf der Basis der einzelnen Antennendiagramme) und dem erfindungsgemäßen Verfahren umgeschaltet werden, so daß der komplette Winkelbereich mit hoher Genauigkeit abgedeckt werden kann.

Das erfindungsgemäße Verfahren kann insbesondere in Abstandswarnradarsystemen auf beweglichen Trägern, z.B. im Kraftfahrzeug, Bahn oder Schiff eingesetzt werden.

Die Erfindung wird anhand eines Ausführungsbeispieles unter Bezugnahme auf Zeichnungen näher erläutert. Es zeigen:
- Fig. 1: Antennendiagramme und Diskriminatorkennlinie eines Zwei-Antennenradarsystems bei Anwendung eines bekannten Verfahrens zur Winkelbestimmung;
- Fig. 2: Antennendiagramme und Diskriminatorkennlinien eines Drei-Antennenradarsystems bei Anwendung eines bekannten Verfahrens zur Winkelbestimmung;
- Fig. 3: den Aufbau eines an sich bekannten Drei-Antennenradarsystems, welches zur Durchführung des erfindungsgemäßen Verfahrens zur Winkelbestimmung eingesetzt wird;
- Fig. 4: Antennendiagramme und Diskriminatorkennlinien eines Drei-Antennenradarsystems bei Anwendung des erfindungsgemäßen Verfahrens zur Winkelbestimmung.

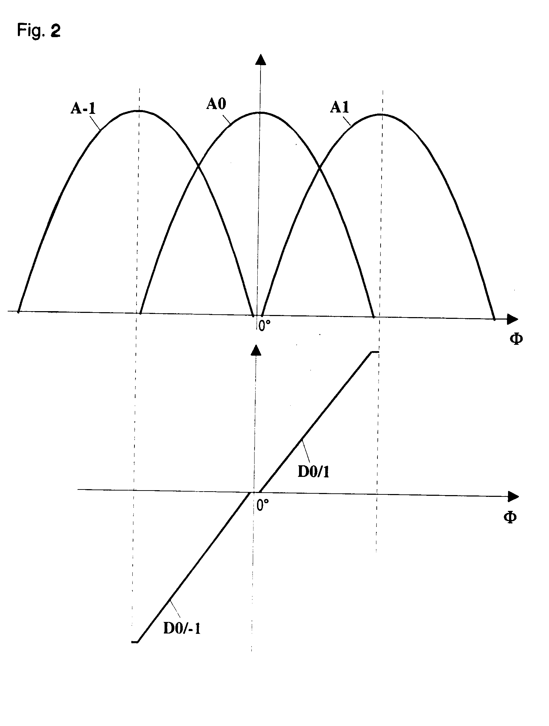

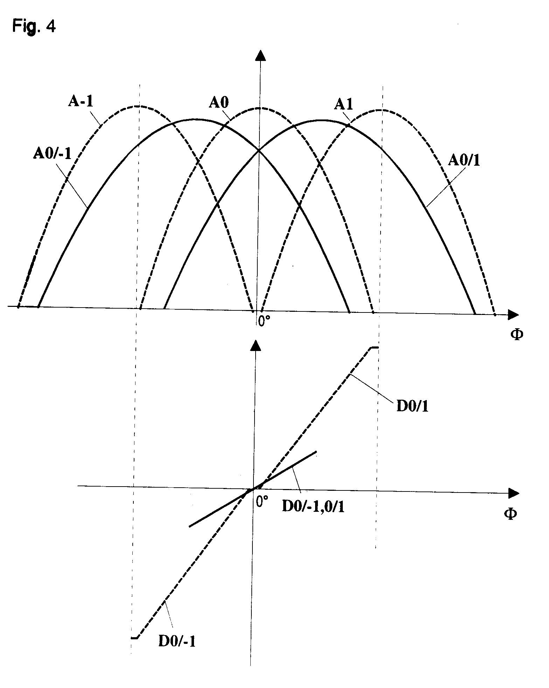

Fig. 4 zeigt die Antennendiagramme (obere Abbildung) und zugehörige Diskriminatorkennlinien (untere Abbildung) bei Anwendung des erfindungsgemäßen Verfahrens unter Einsatz des Drei-Antennenradarsystems nach Fig. 3. Gestrichelt sind die drei Antennendiagramme A-1,A0,A1, die durch separate Ansteuerung der einzelnen Feeds erzeugt werden, eingezeichnet. Diese entsprechen den Antennendiagrammen nach Fig. 2. Wie dort bereits beschrieben, sind die zugehörigen Diskriminatorkennnlinie D0/-1, D0/1 (untere Abbildung der Fig. 4, gestrichelt gezeichnet) insbesondere im Bereich der Hauptstrahlrichtung des Radarsystems (Φ=0⁰) sehr flach, was zu einer unscharfen Winkelmessung führt. Um diesen Nachteil zu überwinden, werden erfindungsgemäß jeweils 2 Feeds gleichzeitig und mit gleicher Phase angesteuert. Die entstehenden Kombinationsantennendiagramme bei gleichzeitigem und phasenrichtigen Ansteuern eines der beiden äußeren F-1 (siehe Fig. 3) und des mittleren Feeds F0 ist in Fig. 4, obere Darstellung mit Bezugsziffer A0/-1 (durchgezoge Linie) eingezeichnet. Das entstehende Kombinationsantennendiagramm bei gleichzeitigem und phasenrichtigen Ansteuern des mittleren und des anderen äußeren Feeds F1 ist in Fig. 4 mit A0/1 bezeichnet. Die beiden Kombinationsdiagramme A0/-1 und A0/1 haben größere Halbwertsbreiten, als die Antennendiagramme A-1 ,A0,A1 bei Einzelansteuerung. Insbesondere weisen sie einen Schnittpunkt bei Φ=0° auf. Darum ist in diesem Winkelbereich eine Winkelbestimmung mit hoher Genauigkeit möglich. Die zugehörige Diskriminatorkennlinie D0/-1,0/1 (durchgezogene Linie) zeigt dort einen steilen Verlauf. In den übrigen Winkelbereichen kann die Winkelbestimmung weiterhin mit der herkömmlichen Methode durchgeführt werden, da dort die zugehörigen Diskriminatorkennlinien D0/-1, D0/1 ausreichend steil sind.

Das erfindungsgemäße Prinzip ist nicht auf Radarsysteme mit drei Feeds beschränkt, sondern kann auf Systeme mit einer beliebigen Anzahl von Feeds größer drei übertragen werden. Dabei steigt mit der Anzahl der Feeds auch die Anzahl der Kombinationsmöglichkeiten für deren Ansteuerung. So können bei einem System mit vier Feeds Kombinationsantennendiagramme durch gleichzeitige und phasenrichtige Ansteuerung von zwei oder drei Feeds erzeugt werden. Durch individuelle Auswahl der einzelnen Feeds stehen weitere Variationsmöglichkeiten offen. Gibt man bei einem Vier-Feed-System zum Beispiel die gleichzeitige und phasenrichtige Ansteuerung von genau zwei Feeds vor, so können z.B. die beiden außenliegenden gewählt werden oder die beiden innenliegenden, die einen geringeren räumlichen Abstand voneinander aufweisen. Man erreicht somit eine große Variabilität, die es ermöglicht, Winkelbereiche für die Messung mit hoher Genauigkeit annähernd frei ausz uwählen.

## Patentansprüche

1. Verfahren zur genauen Winkelbestimmung von Zielen mittels eines Mehrfachantennen-Radarsystems, wobei die einzelnen Antennenrichtungen (A-1,A0,A1) durch mindestens drei räumlich gegeneinander versetzte Feeds (F-1,F0,F1), die einen gemeinsamen Kollimator (R) beleuchten, erzeugt werden, **dadurch gekennzeichnet**, daß durch gleichzeitige und phasenrichtige Ansteuerung mehrerer der Feeds (F-1,F0; F0,F1) mindestens zwei Kombinationsantennendiagramme (A0/-1, A0/1) erzeugt werden, anhand derer die Winkelbestimmung erfolgt, wobei die Schnittpunkte der erzeugten Kombinationsantennendiagramme in Winkelbereichen zu liegen kommen, in denen die exakte Winkelbestimmung erfolgen soll.

2. Verfahren nach Anspruch 1, dadurch gekennzeichnet, daß die erzeugten Kombinationsantennendiagramme (A0/-1, A0/1) im Bereich der Hauptstrahlrichtung des Mehrfachantennen-Radarsystems einen Schnittpunkt aufweisen.

3. Verfahren nach Anspruch 1 oder 2, dadurch gekennzeichnet, daß die erzeugten Kombinationsantennendiagramme (A0/-1, A0/1) zueinander symmetrisch bezüglich der Hauptstrahlrichtung des Mehrfachantennen-Radarsystems sind.

4. Verfahren nach einem der Ansprüche 1 bis 3, dadurch gekennzeichnet, daß die Winkelbestimmung anhand der Kombinationsantennendiagramme (A0/-1, A0/1) mittels Sequential Lobing-Verfahren erfolgt.
